# EUROPEAN PATENT SPECIFICATION

(11) **EP 1 829 675 B1**
(45) Date of publication and mention of the grant of the patent: **30.07.2014**
(21) Application number: 06110287.7
(22) Date of filing: 22.02.2006
(51) Int. Cl.: B32B 17/10, B44F 1/06

(54) **Glazing panel**
Verglasungstafel
Panneau de vitrage

(43) Date of publication of application: 05.09.2007
(73) Proprietor: AGC Glass Europe, 1348 Louvain-la-Neuve (BE)
(72) Inventor: Vicini, Sergio, 5170 Lustin (BE)
(74) Representative: Bayot, Daisy

(56) References cited:
- EP-A- 0 945 411
- EP-A- 1 038 850
- GB-A- 2 213 768
- US-A- 5 434 006
- PATENT ABSTRACTS OF JAPAN vol. 2000, no. 01, 31 January 2000 (2000-01-31) & JP 11 298030 A (ASAHI GLASS CO LTD), 29 October 1999 (1999-10-29)

## Description

This invention relates to glass and particularly to patterned glass sheets and patterned glazing panels and such glazing panels which are laminated.

Patterned glass may be used for decorative purposes, for example, in furniture, sanitary installations, partitions, doors and windows. It may offer various degrees of translucence determined by the structure and design, and thus various degrees of privacy.

Laminated glazing panels are increasingly desired in various applications such as windows, doors, roofing, flooring, balustrades, and banisters. They may offer protection of persons from injury, accidents and defenestration and offer protection from vandalism (for example stone-throwing) and theft by preventing or slowing down break-ins.

Manufacturing patterned glass generally involves passing molten glass through a pair of spaced, parallel rollers as it emerges from a glass furnace. The lower roller is generally engraved so as to form a design on one face of the glass sheet. The upper roller is generally smooth and the upper face of the glass sheet is consequently generally without any surface relief, at least as visible to the naked eye. Nevertheless this face is seldom perfectly flat and when passing one's hand over it or by moving the glass sheet in the light to let play the reflection, irregularities are usually noticeable. These are hills and valleys with a relatively long wavelength but with a very little amplitude (Rtm, as defined hereunder, for this surface may be less than 0.5 µm when measured over a profile length of 4 mm with a cut-off of 0.8 mm, a short range filter of 0.8 mm and a long range filter of 8 mm); they may be called "counterdesign".

When laminating patterned glass sheets with another glass sheet by a bonding film, for example PVB, it is the face of the glass sheet with this counterdesign which is in contact with the bonding film. The non uniformity of this face has for consequence that air may be trapped between the bonding film and the glass sheet, which is detrimental to a good adhesion of the bonding film, and thus to a good adhesion of the glass sheets together in the laminated assembly, and may cause defects. The difficulty in laminating such patterned glass sheets may be particularly noticeable for patterned glass having, on the patterned side, a relatively deep relief; this may be due to a pattern of deep relief creating a significant counterdesign during the manufacturing process.

According to a first aspect, the present invention provides a glazing panel according to claim 1.

The invention may be used, for example, to increase the yield when laminating a patterned glass of a particular design by reducing the defects, or to allow lamination of patterns previously considered unsuitable for lamination on an industrial scale, for example by allowing lamination using a calender.

The texture adapted for lamination with the bonding film may provide a surface with a controlled relief, a surface which is more regular than a surface with an uncertain counterdesign. This may allow a good evacuation of air comprised between the glass sheet and the bonding film. The controlled relief may be adapted to facilitate evacuation of air. Advantageously, the texture adapted for lamination with the bonding film is present on the major part of the surface of the glass sheet, preferably on at least 60%, 70%, 80%, 90% of the surface of the glass sheet.

The texture adapted for lamination with the bonding film preferably does not alter the aesthetics of the decorative pattern when the patterned glass sheet is laminated with another glass sheet.

The texture adapted for lamination with the bonding film may be characterised by the surface roughness of the face which will be in contact with the bonding film. This face, i.e. the opposite face of the patterned glass sheet, may have a surface roughness within the range:
Rtm greater than 80 µm, preferably greater than 100 µm, more preferably greater than 110 µm and less than 200 µm, preferably less than 180 µm, more preferably less than 170 µm; and
Sm less than 3500 µm; Sm preferably greater than 1800 µm, greater than 2000 µm, more preferably greater than 2100 µm and less than 3500 µm, preferably less than 3300 µm, more preferably less than 3200 µm;
   when measured over a profile length of 40 mm with a cut-off of 0.8 mm, a short range filter of 0.8 mm and a long range filter of 8 mm.

The decorative pattern may be one of the patterns commercialised by GLAVERBEL, such as CHINCHILLA, DELTA, QUATRIX, ECLISSI, FLUTEX, etc, or by SAINT-GOBAIN GLASS, such as MASTER-CARRE. They may be applied on clear glass or coloured glass.

Glass sheets forming the laminated glazing may have the same thickness or different thickness. The thickness of the patterned glass sheet may be around 3 mm, for example, about 4 mm, 5 mm, 6 mm, 7 mm, 8 mm or thicker; it is preferably at most about 20 mm. The thickness of the other glass sheet may be greater than about 2mm, for example, of about 3 mm, 4 mm, 5 mm, 6 mm, 7 mm, 8 mm or thicker.

Advantageously, glazing panels according to the invention may have a size greater than 1 m², greater than 2 m², or a DLF size, which is well-known in the art and which refers to a size of 3,21 m by any size, like 1,85 m, 2 m or 2,40 m, for example.

The bonding film is preferably made of a PVB sheet or several PVB sheets, depending on the desired resistance for the glazing panel (the more PVB thickness is great, the more the glazing panel will be resistant). The thickness of a PVB sheet is generally 0.76 mm. Alternatively or in addition to a sheet of PVB, the bonding film may comprise PET and/or EVA. Lamination may be made according to well-known processes, for example, after assembly of the glass sheets and the intervening bonding film, degassing is done by calendering, then the glazing panels are heated (to 130-150°C, for example) and subjected to pressure (up to 13 bars, for example) in an autoclave (during 10 to 20 minutes, for example).

The other glass sheet forming the laminated glazing panel may be any kind of glass that may be generally used in laminated glazing panel, for example clear glass, coated glass, solar-screening glass, tempered glass, coloured glass, etc. It may also be a patterned glass sheet with the opposite face of the patterned face, in contact with the bonding film, presenting a texture different from the decorative pattern and adapted for lamination with the bonding film. In that case, the two decorative patterns may combine to give a visual effect which is different than the visual effect of the patterns separately.

Examples of the present invention will now be described, by way of example only, with reference to the accompanying drawings of which:
Fig 1 is a schematic side view illustrating one possible production process with respect to the present invention;
Fig 2 is a surface roughness chart of a glass surface adapted for lamination with the bonding film in accordance with the present invention;
Fig 3 is a schematic exploded view (not to scale) of one possible laminated glazing panel according to the present invention.

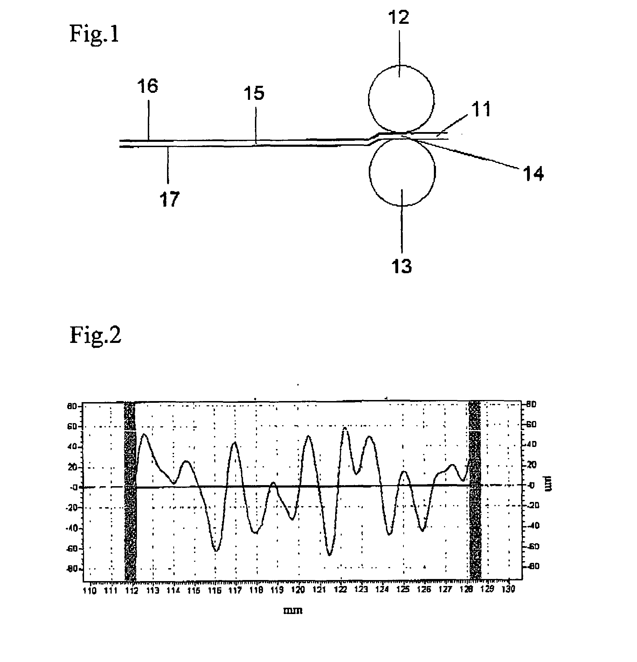

Fig 1 illustrates a rolled glass process. Molten glass 11 at a temperature above its softening point is fed from the output of a glass furnace (not shown) between a pair of parallel, spaced rollers 12, 13. In this example, one of the rollers, in this case the upper roller 12 has a textured surface which forms the counterdesign whilst the other roller 13 has a surface in relief which forms the desired design of the patterned glass. These rollers create a textured surface 16 and a patterned surface 17 in the glass ribbon 15 after the molten glass has been squeezed between the rollers. In this example, the rollers 12, 13 are produced by engraving. The glass ribbon 15 is pulled away as it emerges from the rollers 12, 13 as is commonly known in the art.

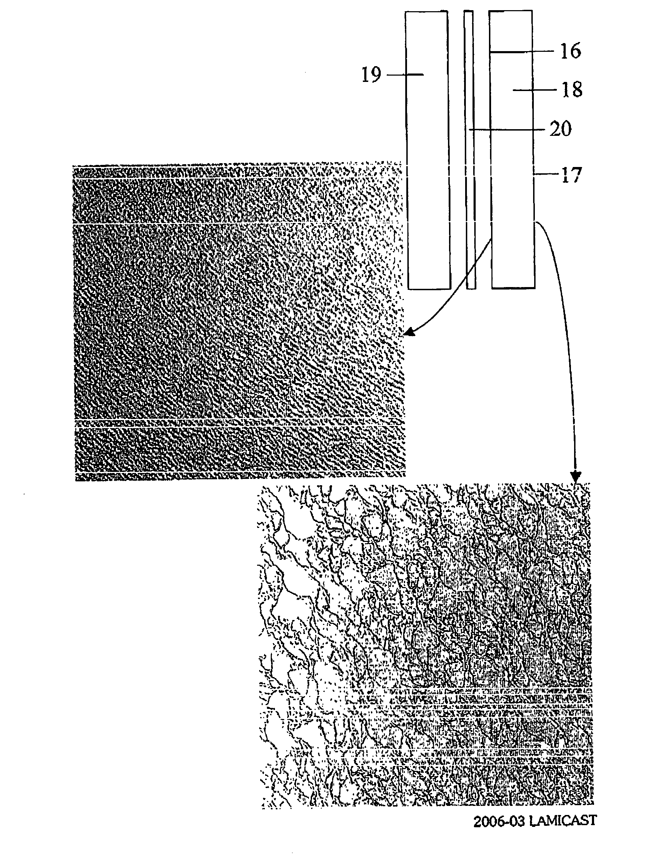

An analysis of a surface of a glass sheet having a textured surface 16 adapted for lamination with a bonding film is shown in Fig 2. This is a Taylor-Hobson Talysurf analysis of surface roughness, as commonly used for analysing surface roughness. Only a portion of the surface roughness analysis is represented in Fig 2. The analysis consists of arranging a fine stylus having a calibrated point in contact with the surface to be analysed and slowly displacing the stylus across the surface so as to record all variations in the altitude of the surface. The following parameters were used to carry out this analysis:

| | |
|---|---|
| Type of machine: | Taylor-Hobson Form Talysurf |
| Mode: | Roughness |
| Cut off: | 0.8 mm |
| Sample length: | 40 mm |
| Short range filter: | 0.8 mm |
| Long range filter: | 8 mm |
| Reference: | Straight |
| Ignore: | 0% |

The following results, which are partially illustrated in Fig 2, were obtained for one particular glass sheet:
Rtm = 135 µm
Rt1 = 125.5 µm
Rt2 = 154.7 µm
Rt3 = 123.8 µm
Sm = 2698 µm

Where:
Rtm is the average of all of the values Rt1, Rt2 .... etc. over the entire profile
Rt1 is the greatest difference in altitude between the highest peak and the lowest valley over the first cut-off portion of the sample
Rt2 is the greatest difference in altitude between the highest peak and the lowest valley over the second cut-off portion of the sample (and so on for Rt3)

Sm is the average of the distance between each time the profile crosses the average line; it represents an indication of the average distance between the main peaks of the profile.
The short range filter and long range filter, as commonly used in the art of measuring surface roughness, are used to separate a characteristic measurement of surface roughness from an overall "waviness" of the sample and from very short wavelength effects.

A second sample of glass having a different form of texture for the surface adapted for lamination with a bonding film had the following characteristics:
Rtm = 160 µm
Sm = 2343 µm
when measured under the same conditions as those used for the first example.

Fig 3 shows one possible laminated glazing panel according to the present invention. The patterned glass sheet 18 shows one face 17 with the decorative pattern DELTA from GLAVERBEL and the other face 16, adapted for lamination with the bonding film 20, with the texture CREPI from GLAVERBEL. The other glass sheet 19, a clear float glass of 4 mm thickness, is laminated with the patterned glass sheet 18 by a single sheet of PVB 20 with a thickness of 0.76 mm.

## Claims

1. Laminated glazing panel comprising at least two sheets of glass held together by an intervening bonding film wherein the first of the two sheets of glass is a patterned glass sheet **characterised in that** the face of the patterned glass sheet with the decorative pattern is exposed to air and the opposite face of the patterned glass sheet, in contact with the bonding film, presents on at least a major part of its surface, a texture different from the decorative pattern and adapted for lamination with the bonding film **in that** it has a surface roughness within the range: Rtm greater than 80 µm and less than 200 µm; and Sm greater than 1800 µm and less than 3500 µm when measured over a profile length of 40 mm with a cut-off of 0.8 mm, a short range filter of 0.8 mm and a long range filter of 8mm.

2. Glazing panel according to claim 1 **characterised in that** the texture adapted for lamination with the bonding film is present on at least 70% of the surface of the first glass sheet.

3. Glazing panel according to claim 1 or 2 **characterised in that** the opposite face of the patterned glass sheet has a surface roughness within the range:
Rtm greater than 100 µm and less than 180 µm; and
Sm greater than 2000 µm and less than 3300 55 µm
when measured over a profile length of 40 mm with
a cut-off of 0.8 mm, a short range filter of 0.8 mm and a long range filter of 8mm.

4. Glazing panel according to any preceding claim **characterised in that** the bonding film comprises one or more sheets of PVB.

5. Glazing panel according to any preceding claim **characterised in that** the second sheet of glass is a patterned glass sheet with the opposite face of the patterned face, in contact with the bonding film, presenting a texture different from the decorative pattern and adapted for lamination with the bonding film.

6. Glazing panel according to any preceding claim **characterised in that** the first sheet of glass has a thickness ranging from 3 to 6 mm.

7. Glazing panel according to any preceding claim **characterised in that** the second sheet of glass has a thickness ranging from 2 to 6 mm.

8. Glazing panel according to any preceding claim **characterised in that** the glazing panel has a size greater than 1 m².

## Patentansprüche

1. Laminiertes Verglasungspaneel, umfassend mindestens zwei Glasplatten, zusammengehalten durch eine dazwischenliegende Bindefolie, wobei die erste der zwei Glasplatten eine strukturierte Glasplatte ist, **dadurch gekennzeichnet, dass** die Seite der strukturierten Glasplatte mit der dekorativen Struktur Luft ausgesetzt ist und die gegenüberliegende Seite der strukturierten Glasplatte, welche mit der Bindefolie in Kontakt steht, auf mindestens einem Großteil ihrer Oberfläche eine von der dekorativen Struktur verschiedene und zur Laminierung mit der Bindefolie eingerichtete Textur zeigt,
wobei sie eine Oberflächenrauheit innerhalb des Bereiches aufweist:
Rtm von größer als 80 µm und weniger als 200 µm; und
Sm von größer als 1800 µm und weniger als 3500 µm,
gemessen über eine Profillänge von 40 mm mit einem Cut-off-Wert von 0,8 mm, einem Nahbereichsfilter von 0,8 mm und einem Fernbereichsfilter von 8 mm.

2. Verglasungspaneel nach Anspruch 1, **dadurch gekennzeichnet, dass** die zur Laminierung mit der Bindefolie eingerichtete Struktur auf mindestens 70% der Oberfläche der ersten Glasplatte vorhanden ist.

3. Verglasungspaneel nach Anspruch 1 oder 2, **dadurch gekennzeichnet, dass** die gegenüberliegende Seite der strukturierten Glasplatte eine Oberflächenrauheit innerhalb des Bereiches aufweist:
Rtm von größer als 100 µm und weniger als 180 µm; und
Sm von größer als 2000 µm und kleiner als 3300 µm,
gemessen über eine Profillänge von 40 mm mit einem Cut-off-Wert von 0,8 mm, einem Nahbereichsfilter von 0,8 mm und einem Fernbereichsfilter von 8 mm.

4. Verglasungspaneel nach einem der vorhergehenden Ansprüche, **dadurch gekennzeichnet, dass** die Bindefolie eine oder mehrere PVB-Lagen umfasst.

5. Verglasungspaneel nach einem der vorhergehenden Ansprüche, **dadurch gekennzeichnet, dass** die zweite Glasplatte eine strukturierte Glasplatte ist, wobei die gegenüberliegende Seite der strukturierten Seite, welche mit der Bindefolie in Kontakt steht, eine von der dekorativen Struktur verschiedene und zur Laminierung mit der Bindefolie eingerichtete Textur zeigt.

6. Verglasungspaneel nach einem der vorhergehenden Ansprüche, **dadurch gekennzeichnet, dass** die erste Glasplatte eine Dicke im Bereich von 3 bis 6 mm aufweist.

7. Verglasungspaneel nach einem der vorhergehenden Ansprüche, **dadurch gekennzeichnet, dass** die zweite Glasplatte eine Dicke im Bereich von 2 bis 6 mm aufweist.

8. Verglasungspaneel nach einem der vorhergehenden Ansprüche, **dadurch gekennzeichnet, dass** das Verglasungspaneel eine Größe von mehr als 1 m² aufweist.

## Revendications

1. Panneau de vitrage feuilleté comprenant au moins deux feuilles de verre maintenues ensemble par un film adhésif intermédiaire, la première des deux feuilles de verre étant une feuille de verre à motif, **caractérisé en ce que** la face de la feuille de verre à motif avec le motif décoratif est exposée à l'air et la face opposée de la feuille de verre à motif, en contact avec le film adhésif, présente, sur au moins une partie majeure de sa surface, une texture différente de celle du motif décoratif et prévue pour être feuilletée avec le film adhésif **en ce qu'**elle présente une rugosité de surface dans la plage :
Rtm supérieure à 80 µm et inférieure à 200 µm ; et
Sm supérieur à 1800 µm et inférieur à 3500 µm
mesuré sur une longueur de profil de 40 mm avec une longueur d'onde de coupure de 0,8 mm, un filtre à courte portée de 0,8 mm et un filtre à longue portée de 8 mm.

2. Panneau de vitrage selon la revendication 1, **caractérisé en ce que** la texture prévue pour être feuilletée avec le film adhésif est présente sur au moins 70 % de la surface de la première feuille de verre.

3. Panneau de vitrage selon la revendication 1 ou 2, **caractérisé en ce que** la face opposée de la feuille de verre à motif présente une rugosité de surface dans la plage :
Rtm supérieure à 100 µm et inférieure à 180 µm ; et
Sm supérieur à 2000 µm et inférieur à 3300 µm
mesuré sur une longueur de profil de 40 mm avec une longueur d'onde de coupure de 0,8 mm, un filtre à courte portée de 0,8 mm et un filtre à longue portée de 8 mm.

4. Panneau de vitrage selon l'une quelconque des revendications précédentes, **caractérisé en ce que** le film adhésif comprend une ou plusieurs feuilles de PVB.

5. Panneau de vitrage selon l'une quelconque des revendications précédentes, **caractérisé en ce que** la deuxième feuille de verre est une feuille de verre à motif, la face opposée de la face à motif en contact avec le film adhésif présentant une texture différente de celle du motif décoratif et prévue pour être feuilletée avec le film adhésif.

6. Panneau de vitrage selon l'une quelconque des revendications précédentes, **caractérisé en ce que** la première feuille de verre a une épaisseur comprise entre 3 et 6 mm.

7. Panneau de vitrage selon l'une quelconque des revendications précédentes, **caractérisé en ce que** la deuxième feuille de verre a une épaisseur comprise entre 2 et 6 mm.

8. Panneau de vitrage selon l'une quelconque des revendications précédentes, **caractérisé en ce que** le panneau de vitrage a une dimension supérieure à 1 m².
